Europäisches Patentamt

European Patent Office

Office européen des brevets

(11) Publication number: **0 198 567**
A2

# EUROPEAN PATENT APPLICATION

(21) Application number: **86200659.0**

(22) Date of filing: **17.04.86**

(51) Int. Cl.⁴: **F 16 G  9/00,** D 07 B  1/02

(30) Priority: **18.04.85  JP 58254/85 U**

(43) Date of publication of application: **22.10.86**
**Bulletin 86/43**

(84) Designated Contracting States: **AT BE CH DE FR GB IT LI
LU NL SE**

(71) Applicant: **E.I. DU PONT DE NEMOURS AND COMPANY,
1007 Market Street, Wilmington Delaware 19898 (US)**

(72) Inventor: **Kinoshita, Toshio, 412 Hinodai-Heights 1-1-1,
Hinodai, Hino-shi Tokyo (JP)**
Inventor: **Takahashi, Fumiyuki,
201 Corpo-Ogawa 4-19-11, Takashimadaira, Itabashi-ku
Tokyo (JP)**

(74) Representative: **van der Beek, George Frans et al,
Nederlandsch Octrooibureau Johan de Wittlaan 15 P.O.
Box 29720, NL-2502 LS 's-Gravenhage (NL)**

(54)  **Rope suitable for transmitting driving force.**

(57)   A rope used in transmitting a drive force by being wound
about a pulley, wherein the core containing aramid fiber yarns in
coated with knitting formed of fiber yarns such as nylon.

0198567

## Background of the Invention

This invention relates to a rope suitable for transmitting a drive force.  To date, a typewriter, printer, copying apparatus, plotter, robot and other control appliances involve a stainless wire rope constructed by twisting a plurality of, for example, 16 extremely fine stainless wires together in order to transmit a driving force.

However, this type of stainless wire rope has drawbacks in that it is relatively heavy, lacks elasticity, has low responsivity and fails to effect high precision transmission of a driving force in appliances of particularly compact size.

## Summary of the Invention

It is accordingly the object of this invention to provide a light weight rope of high flexibility and great toughness which is capable of transmitting driving force with quick response and effecting high precision movement.

To attain the aforementioned object, this invention provides a rope which is constructed by coating a core containing at least aramid fiber with knitting prepared from chemical fiber yarn.

## Brief Description of the Drawings

Fig. 1 is an oblique view according to a first embodiment of this invention; and

Fig. 2 is an oblique view according to a second embodiment of the invention.

## Detailed Description of the Preferred Embodiment

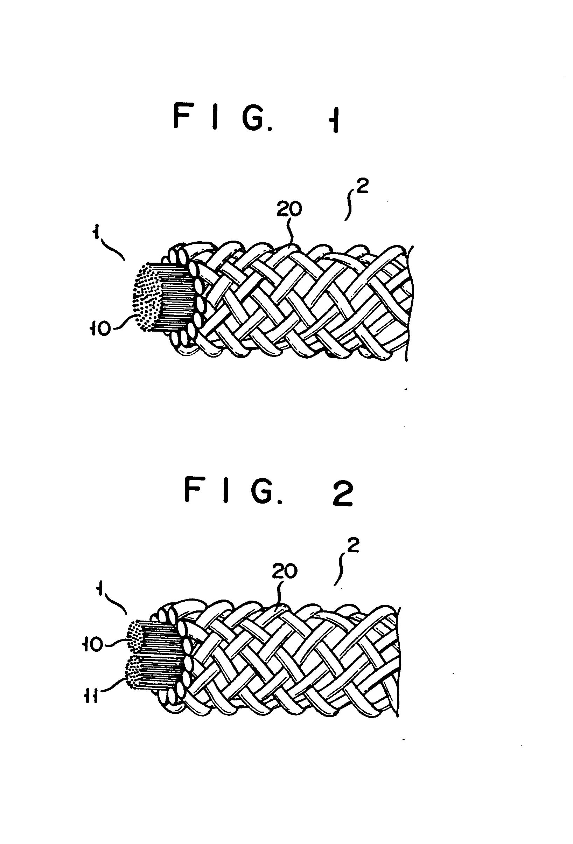

Referring to Fig. 1, reference numeral 1 denotes a core. This core is prepared from aramid fiber yarns 10 manufactured and sold under the trademark Kevlar® by the Du Pont Company. Core 1 is covered with knitting 2 prepared from chemical fiber 20 such as nylon or a polyester fiber sold in Japan under the trademark Tetoron.

A rope formed of, for example, the above-mentioned fiber has a light weight, and is further coated with knitting 2, and is rich in flexibility and expansibility. When, therefore, such rope is applied in transmitting a drive force by being wound around, for example, a pulley, higher responsivity is ensured than in the case where the conventional stainless rope is used.

The above-mentioned rope composed of the core 1 prepared from aramid fibers 10 and knitting 2 is extremely tough, and the elongation (deformation) of the whole rope is prevented by the core 1, which elongation might otherwise arise from the expansability of the knitting .

Fig. 2 shows a rope according to a second embodiment of this invention. In the second embodiment, core 1 is composed of aramid fibers 10 and carbon fibers 11. Knitting 2 is formed of chemical fiber yarns 20 as in the rope of Fig. 1.

The rope of Fig. 2 offers not only the advantages of the rope of Fig. 1, but also the merits that since the core 1 is partly made of carbon fiber yarns, the conductivity of the rope of Fig. 2 ensures the release of the static electricity accumulated in the aramid fiber yarn 10 and knitting 2 when a driving force is transmitted. In other words, the rope of Fig. 2 has an antistatic function. When, therefore, the rope of Fig. 2, is applied for the transmission of a driving force, for example, in a copying machine, it is possible to prevent the occurrence of the drawback that a toner is statically deposited on the rope surface.

The above-mentioned aramid fiber yarn 10 and carbon fiber yarn 11 constituting the core have a low friction resistance as is well-known. In contrast, the rope of this invention is constructed by covering the core 1 with knitting 2 formed of chemical fiber yarns 20 such as nylon or Tetoron fiber yarns, thus offering the advantage of being improved in both expansibility and friction resistance.

It will be noted that this invention is not limited to the above-mentioned embodiment. The invention can be practiced with various modifications without departing from the scope and object. For instance, the knitting may be composed of aramid fiber yarns. This process has the merit of elevating the durability and fatigue resistance of the knitting 2.

Further, the knitting 2 prepared from both aramid fiber yarns and carbon fiber yarns is improved not only in durability and fatigue resistance but also in freedom from static charge. In this case, it is preferred that the knitting 2 or its constituent fiber yarn be impregnated with resin such as silicone, Teflon® fluorocarbon resin or polyurethane in order to elevate the friction resistance of said knitting 2. In such case, it is also possible to ensure the higher durability and fatigue resistance of the knitting 2. Where, however, an antistatic process need not be applied, the carbon fiber yarn can well be dispensed with. Further, the knitting 2 may be composed of natural fiber yarns such as cotton yarns. The number of yarns constituting the core 1 can be optionally selected.

0198567

What is claimed is:

1. A rope comprising:

a core composed of at least aramid fiber yarn; and

a knitting composed of fiber yarn and covering the core.

2. The rope according to claim 1, wherein said core contains carbon fiber yarns.

3. The rope according to claim 2, wherein said knitting contains aramid fiber yarns.

4. The rope according to claim 3, wherein said knitting further contains carbon fiber yarns.

5. The rope according to claim 1, wherein said knitting is impregnated with resin.

6. The rope according to claim 2, wherein said knitting is impregnated with resin.

7. The rope according to claim 3, wherein said knitting is impregnated with resin.

8. The rope according to claim 4, wherein said knitting is impregnated with resin.

9. The rope according to claim 1, wherein said knitting contains aramid fiber yarns.

10. The rope according to claim 9, wherein said knitting further contains carbon fiber yarns.

11. The rope according to claim 9, wherein said knitting is impregnated with resin.

12. The rope according to claim 10, wherein said knitting is impregnated with resin.

0198567

# FIG. 1

# FIG. 2